Europäisches Patentamt

European Patent Office

Office européen des brevets

(11) Veröffentlichungsnummer: **0 156 020 B1**

(12) EUROPÄISCHE PATENTSCHRIFT

(45) Veröffentlichungstag der Patentschrift: 20.03.91

(51) Int. Cl.5: **G01N 27/90**

(21) Anmeldenummer: 84115578.1

(22) Anmeldetag: 17.12.84

(54) Verfahren zur Prüfung von metallischen Bauteilen, insbesondere kerntechnischer Anlagen, mittels Wirbelstrom.

(30) Priorität: 30.03.84 DE 3411898

(43) Veröffentlichungstag der Anmeldung:
02.10.85 Patentblatt 85/40

(45) Bekanntmachung des Hinweises auf die
Patenterteilung:
20.03.91 Patentblatt 91/12

(84) Benannte Vertragsstaaten:
CH DE FR IT LI NL SE

(56) Entgegenhaltungen:
US-A- 2 992 390
US-A- 3 437 810
US-A- 4 061 968
US-A- 4 303 885

(73) Patentinhaber: **Siemens Aktiengesellschaft
Wittelsbacherplatz 2
W-8000 München 2(DE)**

(72) Erfinder: **v. Bernus, Ludwig, Dr. Dipl.-Phys.
Kaulberg 12
W-8551 Hemhofen(DE)**
Erfinder: **Bögelein, Georg
Ganghoferweg 3
W-8520 Erlangen(DE)**
Erfinder: **Waldhütter, Rudolf
Hechtweg 8
W-8520 Erlangen(DE)**

**Beschreibung**

Die Erfindung betrifft ein Verfahren zur Prüfung von Rohren, insbesondere in Wärmetauschern kerntechnischer Anlagen, mittels Wirbelstrom, wobei zur Unterdrückung von konstruktionsbedingten Störeinflüssen mehrere Messungen mit unterschiedlichen Frequenzen vorgenommen und die Meßergebnisse miteinander verknüpft werden.

Aus der US-PS 4 303 885 ist ein Mehrfrequenz-Wirbelstrom-Testgerät bekannt. Dabei werden an einem zu prüfenden Bauteil Messungen mit unterschiedlichen Frequenzen vorgenommen. Die Meßergebnisse werden dann miteinander verknüpft. Dazu dient die als solche bekannte Mehrfrequenzverknüpfung.

Zu den konstruktionsbedingten Störeinflüssen, die die Fehlerermittlung beeinträchtigen, indem sie fehlergleiche Signale hervorrufen, gehören Abstandshalter, Ovalitäten am Beginn eines Rohrbogens, Ablagerungen, Rohrbogen, Einwalzungen, äußere Leitbleche und Strömungsverteilerplatten usw.. Da ihre Signale frequenzabhängig sind, versucht man mit mehreren Frequenzen zu arbeiten und diese so miteinander zur Auswertung zu verknüpfen, daß die Störsignale gegenüber den Nutzsignalen, d.h. gegenüber der Fehleranzeige, abgeschwächt sind. Die Parameter einer solchen Mehrfrequenzverknüpfung müssen jedoch dem zu unterdrückenden Störsignal angepaßt werden. Sind verschiedene Störeinflüsse im zu prüfenden Bereich vorhanden, so müssen in der Regel zu deren Unterdrückung Verknüpfungen mit unterschiedlichen Parametersätzen verwendet werden. Das Problem besteht nun in der Auswahl des jeweils richtigen Parametersatzes für die bei der Prüfung eines Rohres zeitlich hintereinander auftretenden unterschiedlichen Störsignale.

Die Erfindung geht deshalb von der Aufgabe aus, die Messungen durch eine besondere Verknüpfung der Prüfsig nale zu vereinfachen, so daß eine Automatisierung der Fehlerfeststellung bei der Prüfung metallischer Bauteile möglich ist. Dies ist besonders wichtig für die Innenprüfung von Dampferzeugerrohren in Kernkraftwerken, weil dort wegen der Strahlenbeslastung nur kurzzeitig oder überhaupt nur mit Fernbedienung gearbeitet werden kann.

Erfindungsgemäß ist vorgesehen, daß drei Signale erzeugt werden, von denen das
erste zur Feststellung von Fehlern in störfreien oder störarmen Rohrbereichen dient,
zweite zur Feststellung von Fehlern im Bereich starker Störeinflüsse dient,
dritte zur Feststellung starker Störeinflüsse dient, daß diese Signale ständig gleichzeitig auf einen Schwellwert hin überwacht werden und daß eine Fehlermeldung nur dann gegeben wird, wenn entweder
das erste Signal allein oder
das erste und das zweite Signal gemeinsam ihren Schwellwert erreichen.

Bei der Erfindung wird nicht mehr nur an einer Stelle durch die Verwendung einer hierfür spezialisierten Mehrfrequenzverknüpfung eine Unterscheidung zu schaffen versucht, ob ein Signal von einem gesuchten Fehler ausgeht oder von einem zu unterdrückenden Störeinfluß. Vielmehr wird mit den drei Signalen gezielt auf die unterschiedlichen Möglichkeiten bei der Rohrprüfung abgestellt, um eine allgemein, also nicht nur an einer Rohr- (und Fehler-) Stelle geltende Diskriminierung zu erhalten.

Bei der automatisierten Fehlerauffindung sind also drei Analoge Signale $A_1$, $A_2$, $A_3$ gegeben. Dabei kann es sich um die komplexen Signale verschiedener Prüffrequenzen oder um verknüpfte Signale handeln. Durch Diskriminatoren werden die analogen Signale $A_1$, $A_2$, $A_3$ in die TTL-Signale $T_1$, $T_2$, $T_3$ umgewandelt. Die Signale $T_1$ (bzw. $A_1$) und $T_2$ (bzw. $A_2$) dienen zur Fehlerauffindung. Dabei hat das Signal $T_1$ die Aufgabe, Fehler im störfreien Bereich oder im Bereich mit geringen Störeinflüssen anzuzeigen (z. B. Ablagerungen, Abstandshalter, Pilgereffekt). $T_2$ ist zur Auffindung von Fehlern im Bereich eines Störtyps mit großer Amplitude geeignet (z. B. Einwalzung). $T_3$ hat die Aufgabe, das Vorhandensein dieses Störtyps zu melden.

Die Signale $T_1$, $T_2$ und $T_3$ werden dann auf den Eingang einer an sich bekannten TTL-Logik gegeben und dort gemäß der folgenden Wahrheitstabelle weiterverarbeitet:

| Erläuterung | Eingänge | | | Ausgang |
|---|---|---|---|---|
| | T1 | T2 | T3 | |
| Fehler in der Einwalzung oder sehr großer Fehler | Ja | Ja | Ja | Ja |
| Großer Fehler im Bereich der Einwal- zung | Ja | Ja | Nein | Ja |
| Kleiner Feh- ler nicht im Bereich der Einwalzung | Ja | Nein | Nein | Ja |
| Fehlerfreie Einwalzung | Ja | Nein | Ja | Nein |
| Störung | Nein | Ja | Ja | Nein |
| Störung | Nein | Ja | Nein | Nein |
| Störung | Nein | Nein | Ja | Nein |
| Fehlerfreier Rohrbereich außerhalb der Einwalzung | Nein | Nein | Nein | Nein |

Bei der Verwirklichung der Erfindung kann man vorteilhaft so vorgehen, daß das erste Signal eine Amplitude ist, die als komplexer Analogwert vorliegt, und daß davon der Imaginärteil für den Schwellwert-Vergleich benutzt wird. Die Parameter des z. B. als ALS- bzw. AH-Mix erzeugten Signals sind so gewählt, daß alle Störeinflüsse an der Rohraußenoberfläche (Abstandshalter, Leitblech, Strömungsverteilerplatte) unterdrückt werden. Das Signal besitzt eine vergleichsweise hohe Prüfempfindlichkeit und dient zur Auffindung von Fehlern im gesamten Rohr mit Ausnahme der Einwalzung. Diese führt nämlich wegen der hohen Empfindlichkeit zu einem falschen Fehlersignal.

Eine weitere Ausbildung der Erfindung besteht darin, daß das zweite Signal ein der erwarteten Störgröße angepaßter komplexer Analogwert ist, und daß davon das Verhältnis von Realteil zu Imaginärteil für den Schwellwertvergleich benutzt wird. Mit diesem Signal werden Fehler im Bereich starker Störer festgestellt, so daß eine verringerte Fehlerempfindlichkeit gegenüber Fehlern an den Stellen vorliegt, wo solche Störer nicht vorhanden sind. Ein Störer dieser Art ist vor allem die Einwalzstelle.

Für die Erkennung der sogenannten starken Störer kann man vorteilhaft so vorgehen, daß das dritte Signal ein mit einer geeigneten Frequenz gemessener Impedanzwert ist, und daß davon der Realteil (X-Wert) für den Schwellwertvergleich benutzt wird.

Um die Synchronisierung der Signale sicherzustellen, kann der Logik insbesondere auf dem ersten Kanal ein Verzögerungsglied mit einstellbarer Verzögerungszeit vorgeschaltet sein. Ein Zeitglied auf dem dritten Kanal kann für eine zeitliche Verlängerung dieses Signals sorgen, damit im Bereich der gesamten Einwalzung (ca. 60 mm) wohldefinierte Bedingungen herrschen.

Zur näheren Erläuterung der Erfindung werden anhand der beiliegenden Zeichnung als Ausführungsbeispiele Blockschaltbilder mit einer TTL-Logik beschrieben, mit der die Erfindung bei der automatisierten Rohrprüfung verwirklicht wird.

Mit 1 ist ein Geräteschrank bezeichnet, der die Elektronik für **nicht** dargestellte bekannte Wirbelstromsonden enthält, die zur Prüfung von Dampferzeugerrohren eines Druckwasserreaktors eingesetzt werden.

3

EP 0 156 020 B1

An seinen Ausgängen 2, 3 und 4 werden die drei komplexen Analogsignale $A_1$, $A_2$ und $A_3$ abgenommen.
Das Signal $A_1$ ist eine lineare Verknüpfung der Frequenzen 200 kHz und 400 kHz.
Das Signal $A_2$ ist eine lineare Verknüpfung der Frequenzen 400 kHz und 990 kHz.
Das Signal $A_3$ ist die Impedanz der Prüfspule gemessen bei 400 kHz.

Die Ausgänge 2, 3, 4 sind mit drei einstellbaren Schwellwertgebern 5, 6, 7 verbunden, in denen die Signale $A_1$, $A_2$, $A_3$ ständig mit folgenden Schwellwerten verglichen werden:

Die sogenannte Y-Schwelle 5 für den Imaginärteil des Signals $A_1$ entspricht der Anzeige des Testfehlers 3x0,3x100%-12dB. Wird dieser Wert überschritten, so erscheint am Ausgang 8 ein normiertes Signal $T_1$ mit 5V.

Als sogenannte Winkel-Schwelle wird für das Signal $A_2$ ein einer Fehlertiefe von 20 % der Rohrwandstärke entsprechender Wert für das Verhältnis von Realteil zu Imaginärteil vorgegeben. Bei Überschreiten des Schwellwertes erscheint Am Ausgang 9 das auf 5V normierte Signal $T_2$.

Die sogenannte X-Schwelle 7 zur Erkennung einer Einwalzung oder einer ähnlich starken Störung spricht auf den Realteil des mit 400 KHz angeregten Analogsignals $A_3$ an. Der Schwellwert für das am Ausgang 10 erscheinende normierte Signal $T_3$ wird so eingestellt, daß die Einwalzung in allen Fällen sicher erkannt wird.

Der Ausgang 8 ist über ein Verzögerungsglied 11 mit dem Eingang 12 einer TTL-Logik 13 verbunden. Die Verzögerungszeit beträgt ca. 25 ms entsprechend 5 mm Rohrlänge.

Der Ausgang 9 führt direkt zum Eingang 14 der TTL-Logik 13.

Der Ausgang 10 führt zu einem Speicherglied 15, mit dem das Signal $T_3$ auf ca. 250 ms Dauer verlängert wird, so daß der Eingang 16 der TTL-Logik bei Ansprechen der X-Schwelle 7 mindestens 250 ms beaufschlagt ist.

Die TTL-Logik 13 meldet an ihrem Ausgang 17, an den eine Datenerfassungsanlage, z. B. ein Magnetband oder dergleichen angeschlossen ist, einen Fehler nach der Verknüpfung der vorstehenden Tabelle. Dieser Fehler wird in der Datenerfassungsanlage einem Rohrbereich zugeordnet, der über eine nicht dargestellte Wegerfassung einer Wirbelstromsonde, z. B. über einen zeitabhängigen Sondenvorschub, eingegeben wird.

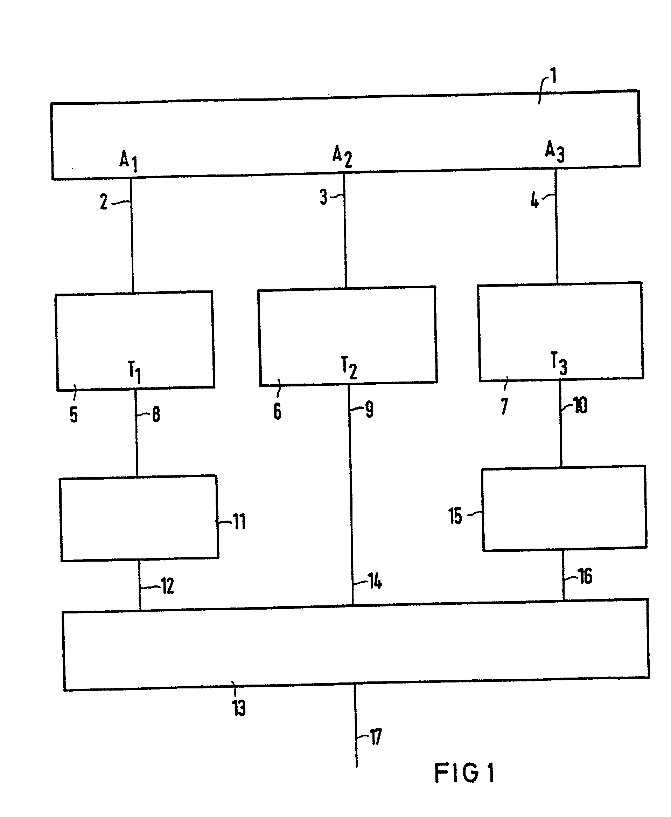

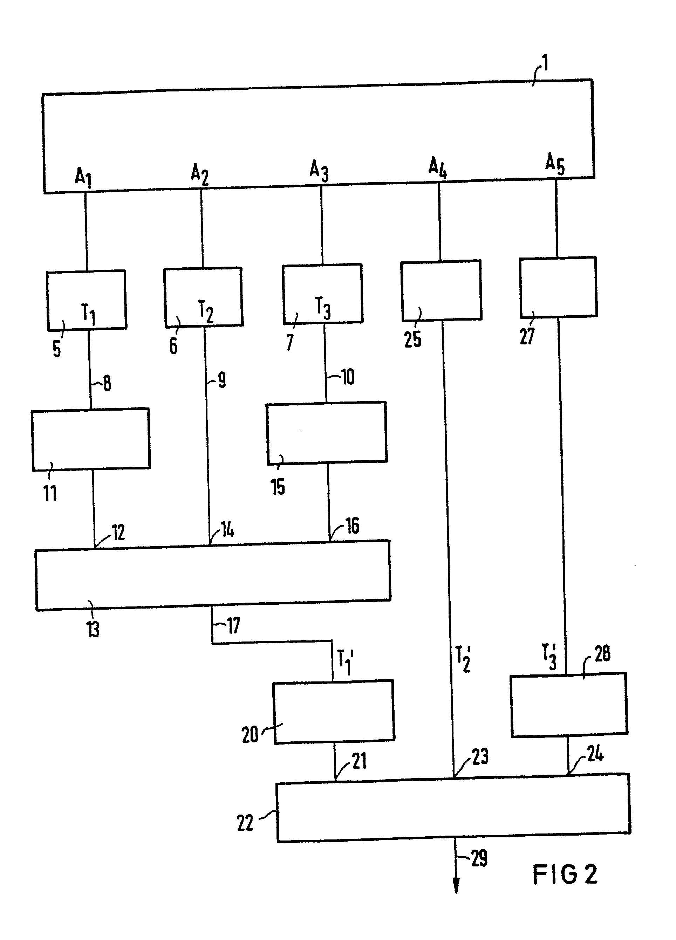

Falls mehr als zwei Störtypen unterschieden werden müssen, besteht die Möglichkeit, gemäß Fig. 2 mehrere Signalverknüpfungslogiken hintereinander zu schalten. Dabei wird der Ausgang 17 der vorgeschalteten Logik 13 gegebenenfalls über ein Verzögerungsglied 20 mit dem Eingang 21 der nachgeschalteten Logik 22 verbunden. Die Eingänge 23 und 24 der nachgeschalteten Logik 22 stehen dann zum Erkennen eines weiteren Störertyps und zur Fehlerauffindung an dieser Stelle zur Verfügung. Dieser Störertyp kann z.B. von den als Dents bezeichneten Ablagerungen herrühren. Dazu wird ein Signal $A_4$ des Geräteschranks 1 über einen Schwellwertgeber 25 auf den Eingang 23 gegeben. Als Signal $A_5$ kommt ein 50 kHz-Analogsignal über einen Schwellwertgeber 27 und einen Speicher 28 mit 25 ms Verzögerung auf den Eingang 24. An dem Ausgang 29 ist wiederum eine Datenerfassungsanlage angeschlossen.

Der Vorteil der Erfindung besteht darin, daß ein Störer präzise erkannt werden kann, unabhängig von einer oft zu ungenauen Messung des Spulenortes durch den Weggeber des Manipulators Der Prüfbereich, in dem die für diesen Störer geeignete Mehrfrequenzverknüpfung eingesetzt wird, kann dadurch mit dem Bereich der Störanzeige exakt zur Deckung gebracht werden.

9 Patentansprüche
2 Figuren

## Ansprüche

1. Verfahren zur Prüfung von Rohren, insbesondere in Wärmetauschern kerntechnischer Anlagen, mittels Wirbelstrom, wobei zur Unterdrückung von konstruktionsbedingten Störeinflüssen mehrere Messungen mit unterschiedlichen Frequenzen vorgenommen und die Meßergebnisse miteinander verknüpft werden, **dadurch gekennzeichnet**, daß auf diese Wei drei Signale erzeugt werden, von denen das

   erste zur Feststellung von Fehlern in störfreien oder störarmen Rohrbereichen dient,

   zweite zur Feststellung von Fehlern im Bereich starker Störeinflüsse dient,

   dritte zur Feststellung starker Störeinflüsse dient, daß diese Signale ständig gleichzeitig auf einen Schwellwert hin überwacht werden und daß eine Fehlermeldung nur dann gegeben werden wird, wenn entweder

   das erste Signal allein oder

   das erste und das zweite Signal gemeinsam ihren Schwellwert erreichen.

4

2.  Verfahren nach Anspruch 1, **dadurch gekennzeichnet,** daß das erste Signal eine Amplitude ist, die als komplexer Analogwert vorliegt, und daß davon der Imaginärteil für den Schwellwertvergleich benutzt wird.

3.  Verfahren nach Anspruch 1 oder 2, **dadurch gekennzeichnet,** daß das zweite Signal ein der erwarteten Störgröße angepaßter komplexer Analogwert ist, und daß davon das Verhältnis von Realteil zu Imaginärteil für den Schwellwertvergleich benutzt wird.

4.  Verfahren nach Anspruch 1, 2 oder 3, **dadurch gekennzeichnet,** daß das dritte Signal ein mit einer geeigneten Frequenz gemessener Impedanzwert ist, und daß davon der Realteil für den Schwellwertvergleich benutzt wird.

5.  Verfahren nach einem der Ansprüche 1 bis 4, **dadurch gekennzeichnet,** daß ein Signal vor der Verknüpfung um 5 bis 50 ms verzögert wird.

6.  Verfahren nach einem der Ansprüche 1 bis 5, **dadurch gekennzeichnet,** daß ein Signal vor der Verknüpfung um 50 bis 250 ns verlängert wird.

7.  Verfahren nach Anspruch 1, **dadurch gekennzeichnet,** daß die Fehlermeldung als erstes von drei Signalen für eine weitere Verknüpfung verwendet wird, bei der das zweite Signal zur Feststellung von Fehlern im Bereich eines anderen starken Störeinflusses dient und das dritte Signal zur Feststellung dieses anderen starken Störeinflusses dient.

8.  Verfahren nach Anspruch 7, **dadurch gekennzeichnet,** daß das dritte Signal der ersten Verknüpfung und das dritte Signal der weiteren Verknüpfung mit unterschiedlichen Frequenzen erzeugt werden.

9.  Verfahren nach Anspruch 1 bis 8, **dadurch gekennzeichnet,** daß das erste und das zweite Signal jeweils in an sich bekannter Weise nach dem Prinzip der Mehrfrequenzverknüpfung erzeugt werden.

## Claims

1.  Method for testing pipes, more particularly in heat exchangers of nuclear facilities, by means of eddy current, whereby for the purpose of suppressing construction-dependent disturbing influences several measurements are taken with different frequencies and the results of measurement are combined with each other, characterised in that in this way there are generated three signals of which the first is used to determine errors in disturbance-free or low-disturbance pipe regions, the second is used to determine errors in the region of strong disturbing influences, the third is used to determine strong disturbing influences, in that these signals are constantly monitored at the same time on the basis of a threshold value and in that an error message will only be transmitted if either the first signal alone or the first and the second signal together reach their threshold value.

2.  Method according to claim 1, characterised in that the first signal is an amplitude which is present as a complex analog value and in that therefrom the imaginary part is used for the threshold value comparison.

3.  Method according to claim 1 or 2, characterised in that the second signal is a complex analog value which is matched to the expected disturbance variable and in that therefrom the ratio of real part to imaginary part is used for the threshold value comparison.

4.  Method according to claim 1, 2 or 3, characterised in that the third signal is an impedance value measured with a suitable frequency and in that therefrom the real part is used for the threshold value comparison.

5.  Method according to one of the claims 1 to 4, characterised in that a signal is delayed before combination by 5 to 50 ms.

6.  Method according to one of the claims 1 to 5, characterised in that a signal is extended before combination by 50 to 250 ns.

7. Method according to claim 1, characterised in that the error message is used as the first of three signals for further combination, in which case the second signal is used to determine errors in the region of another strong disturbing influence and the third signal is used to determine this other strong disturbing influence.

8. Method according to claim 7, characterised in that the third signal of the first combination and the third signal of the further combination are generated with different frequencies.

9. Method according to claim 1 to 8, characterised in that the first and the second signal are each generated in a manner known per se according to the principle of multi-frequency combination.

**Revendications**

1. Procédé pour tester des tubes, situés notamment dans des échangeurs de chaleur d'installations nucléaires, à l'aide de courants de Foucault, et selon lequel pour supprimer des influences parasites conditionnées par la construction, on exécute plusieurs mesures avec des fréquences différentes et on combine entre eux les résultats de mesure, caractérisé en ce qu'on produit de cette manière trois signaux, parmi lesquels

le premier signal sert à déterminer des défauts présents dans des zones de tubes non soumises à des parasites ou faiblement soumises à des perturbations,

le second signal servant à déterminer des défauts dans la zone d'influences parasites intenses,

le troisième signal sert à déterminer des influences parasites intenses,

que l'on contrôle simultanément en permanence ces signaux en rapport à une valeur de seuil, et qu'une signalisation de défaut n'est délivrée que lorsque

soit le premier signal seul,

soit le premier signal et le second signal en commun dépassent leur valeur de seuil.

2. Procédé suivant la revendication 1, caractérisé par le fait que le premier signal possède une amplitude présente en tant que valeur analogique complexe et qu'on utilise la partie imaginaire de cette valeur pour réaliser la comparaison à une valeur de seuil.

3. Procédé suivant la revendication 1 ou 2, caractérisé par le fait que le second signal est une valeur analogique complexe adaptée à la grandeur parasite attendue et qu'on utilise le rapport de la partie réelle à la partie imaginaire de cette valeur pour réaliser la comparaison par rapport à une valeur de seuil.

4. Procédé suivant la revendication 1,2 ou 3, caractérisé par le fait que le troisième signal est une valeur d'impédance mesurée avec une fréquence appropriée et qu'on utilise la partie réelle de cette valeur pour réaliser la comparaison à une valeur de seuil.

5. Procédé suivant l'une des revendications 1 à 4, caractérisé par le fait qu'on retarde un signal de 5 à 50 ms avant la combinaison.

6. Procédé suivant l'une des revendications 1 à 5, caractérisé par le fait qu'on allonge la durée d'un signal de 50 à 250 ns avant la combinaison.

7. Procédé suivant la revendication 1, caractérisé par le fait qu'on utilise la signalisation de défauts en tant que premier des trois signaux pour une combinaison ultérieure, lors de laquelle on utilise le second signal pour déterminer des défauts dans la zone d'une autre influence parasite intense et qu'on utilise le troisième signal pour déterminer cette autre influence parasite intense.

8. Procédé suivant la revendication 7, caractérisé par le fait que le troisième signal de la première combinaison et que le troisième signal de l'autre combinaison sont produits avec des fréquences différentes.

9. Procédé suivant les revendications 1 à 8, caractérisé par le fait que le premier signal et le second signal sont produits respectivement d'une manière connue en soi selon le principe de la combinaison à fréquences multiples.

FIG 1

FIG 2